# EUROPEAN PATENT APPLICATION

(11) **EP 1 586 408 A2**
(43) Date of publication of application: **19.10.2005**
(21) Application number: 05251873.5
(22) Date of filing: 24.03.2005
(51) Int. Cl.: B23K 26/38, B23K 26/08

(54) **System for laser drilling of shaped holes**

(30) Priority: 26.03.2004 US 810923
(71) Applicant: UNITED TECHNOLOGIES CORPORATION, Hartford, Connecticut 06101 (US); The University of California, California 94550 (US)
(72) Inventor: Lehane, Christopher J., South Windsor, CT 06074 (US); Shirk, Michael D., Brentwood, CA 94513 (US); Stuart, Brent C., Livermore, CA 94550 (US); Armstrong, J. Paul, Livermore, CA 94550 (US)
(74) Representative: Hall, Matthew Benjamin

(57) **Abstract**

A laser drilling apparatus comprising an apparatus (11) for emitting a plurality of laser pulses, an apparatus (13) for deflecting the plurality of laser pulses at a part, an apparatus (26) for positioning the part for receiving the plurality of laser pulses, and an apparatus (27) for controlling the deflection apparatus and the positioning apparatus to drill a shaped hole in the part.

## Description

The invention relates to an apparatus and method for operating such an apparatus to control the laser drilling of holes in a part. More particularly, the invention relates to an apparatus for precisely controlling the drilling of laser holes in metallic components and ceramic-coated metallic components.

Many parts and components utilized in gas turbine engines require the internal circulation of air to remove heat from the part during operation and to provide a coating of cool air over the exterior of the part in order to provide protection from possibly damaging heat. Air is moved from inside the part through holes to the exterior of the part. A variety of methods have been devised to fabricate cooling holes in gas turbine engine parts. Many such methods include the physical drilling of a part. While lasers are capable of removing portions of a part, problems typically arise from the inability to control the precise absorption of the laser energy and to direct it appropriately. In addition, the holes drilled by lasers typically are cylindrical and have a significant amount of recast and heat affected zone which are detrimental to the performance of the part.

What is therefore needed is a system, and a method for using such a system, for accurately controlling laser energy to fashion shaped holes in parts, particularly in gas turbine engine components and airfoils. Shaped holes are holes that deviate from a hole that is drilled by simply directing a laser beam to a part. With typical laser parameters used for drilling holes, these holes will be predominately cylindrical in nature with a degree of taper throughout the length of the hole. A shaped hole is a hole that deviates from this typical profile. Shaped holes are from the following group of holes:
- holes are larger than a hole drilled by a laser beam that is static.
- holes with a cross section that is non-cylindrical in nature for a section of the hole.
- holes that have a cross section with varying area over the length of the hole.
- holes that have a section of the hole that is shaped and a section that is cylindrical.
- in addition, the holes may have a large length/diameter ratio and may be not normal to the surface.

Accordingly, it is an object of the present invention to provide an apparatus and method for operating such an apparatus to control the laser drilling of holes in a part. More particularly, the invention relates to an apparatus for precisely controlling the drilling of laser holes in metallic components and ceramic-coated metallic components.

In accordance with the present invention, a laser drilling apparatus comprises an apparatus for emitting a plurality of laser pulses, an apparatus for deflecting the plurality of laser pulses at a part, an apparatus for positioning the part for receiving the plurality of laser pulses, and an apparatus for controlling the deflection apparatus and the positioning apparatus to drill a shaped hole in the part.

In further accordance with the present invention, each of the plurality of laser pulses of the aforementioned apparatus is less than or equal to 100 nanoseconds.

In further accordance with the present invention, a laser drilling apparatus comprises a laser for emitting a plurality of laser pulses, a beam delivery system for receiving the plurality of laser beams comprising a scanning device for deflecting and emitting the plurality of laser pulses, a part chamber comprising a part holder for positioning a part to receive the deflected plurality of laser pulses, and a computer control for controlling the part holder and the scanning device to drill a hole in the part using the plurality of laser pulses.

In further accordance with the present invention, a method for laser drilling holes comprises the steps of emitting a plurality of laser pulses from a laser, deflecting the plurality of laser pulses off of a scanning device and emitting the plurality of laser pulses, and utilizing a part holder within a part chamber to position a part to be drilled such that the part receives the plurality of laser pulses deflected off of the scanning device.

Other features, objects, and advantages of the invention will be apparent from the description and drawings, and from the claims.

Preferred embodiments of the present invention will now be described by way of example only and with reference to the accompanying drawings in which: -
FIG. 1 is a diagram of the laser drilling apparatus of the present invention.
FIGS. 2a-2b are illustrations of exemplary beam intensity cross sections of the present invention.
FIG. 3 is a diagram of a sample path of the laser beam pulses of the present invention.

Like reference numbers and designations in the various drawings indicate like elements.

It is therefore a teaching of the present invention to provide an apparatus for drilling shaped holes in a part. The apparatus includes, in general, a laser which is capable of emitting predetermined and precisely controlled pulses of laser energy for removing a deterministic amount and shape of a portion of the material comprising the part to be drilled, as well as the necessary hardware optics and control systems to create the shaped hole. In a preferred embodiment, the laser employed is a chirped-pulse amplification (CPA) system operating in the femtosecond to low picosecond regime. The chirped pulses of laser light are configured and aimed as desired utilizing a beam delivery system. The beam delivery system provides for the precise scanning movement of the laser pulses across the surface of the part to be drilled. A part to be drilled is preferably contained within a system/part chamber configured to provide an atmosphere conducive to laser drilling as well as providing the means for manipulating the part into a position from which it may be laser drilled. Both the movable part holder, and the scanning device located within the beam delivery system, may be controlled by a computer control to allow for precise movement of the part and the laser beam.

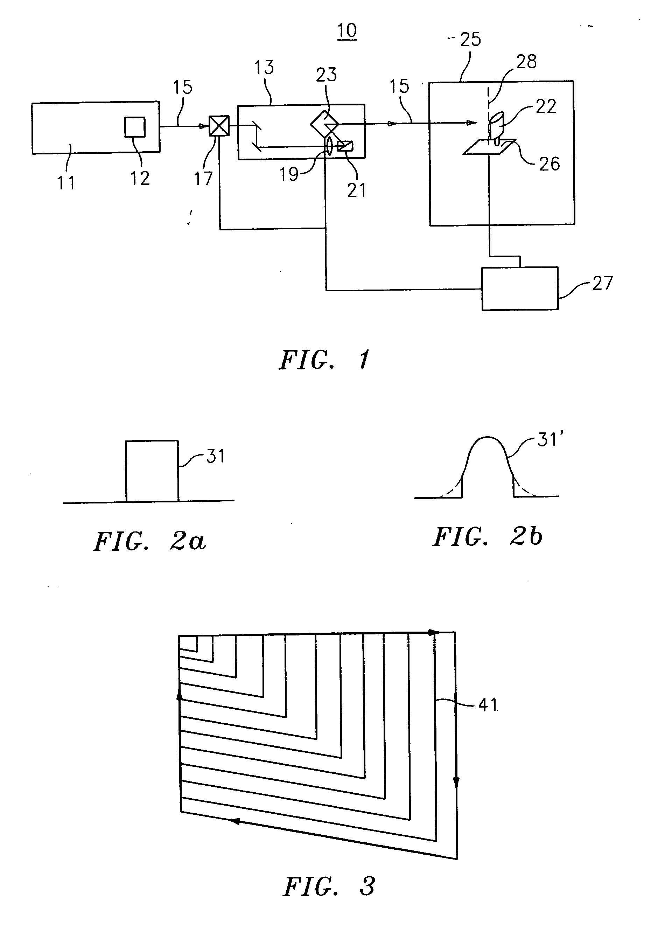

With reference to FIG. 1, there is illustrated in detail a composition and construction of the laser drilling apparatus 10. Laser drilling apparatus 10 includes a laser 11 from which is emitted a laser beam 15. Laser beam 15 enters into a beam delivery system 13 dedicated to focusing, configuring, and controlling the position of the exiting laser beam 15. After exiting from the beam delivery system 13, laser beam 15 is directed into a system/part chamber 25. The system/part chamber 25 provides for a physical environment conducive to laser drilling a part. In a preferred embodiment, the part to be drilled is attached to a part holder 26. As will be discussed more fully below, part holder 26, is capable of orienting the part 22 into a desired position. A computer control 27 communicates with the part holder 26 in order to position the part to be drilled. In addition, computer control 27 is in communication with subcomponents of beam delivery system 13, particularly a scanning device 23, so as to direct the precise movement of the laser beam across the surface of the part to be drilled. The details of each of these major components are described more fully below.

The laser 11 of the present invention is capable of emitting pulses of laser light each with a given duration and energy. In a preferred embodiment, the duration of each laser pulse is less than 10 picoseconds. In test applications, the pulse duration used with a CPA Yb:YAG system was 2.4 picoseconds. Other tests were performed with a CPA laser with pulse durations ranging from 100 femtoseconds to 10 picosecond. By carefully controlling the parameters of the pulse, a deterministic amount of material may be removed from the part to be drilled with each individual pulse. Lasers 11 capable of performing in a chirped-pulse amplification system include, but are not limited to, CPA Ti:Sapphire, CPA Cr:LiSAF, CPA Yb:YAG, CPA Yb:YLF, CPA optical parametric amplifier systems, and hybrid systems based on such, excimer lasers, Q-switched solid state lasers (both fundamental wavelength and frequency multiplied), and mode locked solid state lasers. Specifically, the present invention is drawn to the inclusion of any laser system, but particularly a CPA system, characterized as being deterministic insomuch as the material removal of a target part may be precisely determined due to the use of processes such as multiphoton ionization and electron avalanche. As a result of this characteristic, pulse widths of the laser pulses comprising the laser beam 15 are so short, typically between 100 femtoseconds and 10 picoseconds, that the bulk of the deposited energy contained within laser beam 15, and more specifically within each laser pulse, remains in the material that is being removed and is not absorbed into the part 22 being machined. A typical pulse imparts an amount of energy in a range equal to approximately between one and five milliJoules. This fact both reduces the heat affected zone starting at the point of contact of the laser beam 15 and the part to be drilled, and improves metallurgy and precision. In a preferred embodiment, laser pulses are emitted at a frequency of preferably at least 1 kilohertz, most preferably at least 10 kilohertz wherein each pulse is of a duration between one femtosecond and ten picoseconds although pulse duration may be as long as 100 nanoseconds. Shutter 17 is activated so as to alternatingly allow laser beam 15 to pass on to beam delivery system 13 and to block the progression of laser beam 15 from reaching beam delivery system 13. Shutter 17 is any device acting to absorb high-average power without causing turbulence to distort the laser beam. In a preferred embodiment, shutter 17 will be water cooled. A power control is instituted because the systems operate most reliably at full power, while the optimal power to be directed onto the part for material removal is less than full power. The output power delivered to the part is actively controlled using an adjustable power control. One example would be a ½-waveplate/polarizer combination 12 is preferably utilized prior to the emission of laser beam 15 from laser 11. The ½-waveplate/polarizer 12 serves to control power out of the laser. Types of polarizers incorporated in a ½-waveplate/polarizer power control include thin film polarizers and gratings. Alternatively an adjustable beam splitter could be used in place of the ½-waveplate/polarizer.

After leaving the laser 11, the laser beam 15 enters into the beam delivery system 13 of the present invention. It is the function of beam delivery system 13 to alter the characteristic of the laser beam pulses comprising laser beam 15 into a desired form, and to aim and emit laser beam 15 at system/part chamber 25 so as to effectively laser drill a hole in a part 22 possessing desired characteristics. The delivery system 13 may make use of a focusing lens 19. Focusing lens 19 serves to focus laser beam 15 and counteract any dispersion of the laser beam 15 occurring prior to entering focusing lens 19. Alternative means of focusing include reflective curved mirrors, holographic elements, and a multiple lens telescopes. After passing through focusing lens 19, but before exiting the delivery system 13, the laser beam 15 is reflected off of a scanning device 23. In an alternative embodiment, the scanning device may be placed prior to the final focusing lens 19. Scanning device 23 is utilized to deflect the incoming laser beam 15 in a precisely controlled manner so as to follow a controlled route across the surface of a part to be drilled. As will be described more fully below, the movement of scanning device 23 is controlled by computer control 27. Examples of scanning devices, which may be utilized include, but are not limited to, autometric scanners, piezoelectric driven tip-tilt mirrors, and voice coil driven tip-tilt mirrors. Prior to interacting with scanning device 23, the laser beam 15 may pass through one or more optical components 21. Optical components which may be utilized include but are not limited to, 1/4 and 1/2 wave plates, phase plates for beam shaping and items such as mirrors, wedges, and windows to direct the beam along a convenient path and sample the beam for diagnostic purposes. Phase plates for beam shaping may also be placed in the laser. Examples of diagnostic components which may be utilized as optical components 21 include, but are not limited to, CCD cameras, photo-diodes, autocorrelators, power meters, and quad cell detectors configured to provide feedback to the computer control 27 information such as the laser beam's 15 temporal characteristics, alignment, and power output.

Specifically, when computer control 27 senses that the power of the laser pulses is too low or too high, computer control 27 acts to adjust the variable beam splitter so as to emit laser beam 15 having desired properties. In addition, the laser beam power may be controlled over the course of drilling to the desired profile.

With reference to FIG. 2A and 2B, there is illustrated exemplary beam intensity cross-sections, or profiles, which may be utilized in the present invention. With reference to FIG. 2A, beam profile 31 is referred to as a "tophat" beam profile. With reference to FIG. 2B, there is illustrated laser beam spatial profile 31'. Spatial profile 31' is a result of clipping, or masking, a Gaussian profile so as to remove the tails (illustrated with dotted lines). FIGS. 2A and 2B therefore represent two exemplary spatial profiles which may be utilized to control the energy distribution of each laser pulse comprising laser beam 15 used to perform laser drilling. The desired spatial profiles are obtained by passing the laser beam 15 through a phase plate.

After exiting beam delivery system 13, laser beam 15 is directed towards system/part chamber 25. System/part chamber 25 is comprised of a part holder 26. Part holder 26 is any part holder or set of mechanical stages that may be used to bring an area of a part 22 mounted to part holder 26 into proximity with the drill plane 28 of the laser beam 15. "Drill plane" 28 refers to a plane in three-dimensional space upon which laser beam 15 has the desired profile. This may be prior to, at, or after the focal plane. System/part chamber 25 forms a chamber or work enclosure built around part holder 26 and may be employed to place a part 22 attached to part holder 26 in a controlled atmosphere or any environment suitable for drilling, specifically a near vacuum or in an atmosphere of air or that of an alternate gas such as helium. For short pulse systems, typically those below a 10 picosecond per pulse, a 20 mTorr near vacuum (or lower) or an atmosphere comprised primarily of helium are the preferred ablation environments when the part 22 to be drilled is comprised of metals or ceramics. By "primarily of helium" it is meant an atmosphere that can include at least half helium by weight or volume. This will be described more fully below. Part holder 26 is in communication with computer control 27 and may be oriented in multiple degrees of freedom by commands issued by computer control 27.

As noted above, computer control 27 is in communication with part holder 26 and scanning device 23. Preferably, computer control 27 has access to pre-stored data defining the orientation of the part and the deflection of the laser pulses by the scanning device required to drill a hole in the part. Typically, such data is in a format to be inputted into a computer numeric control (CNC) program. By communicating with part holder 26, computer control 27 is able to place a part 22 attached to part holder 26 in a position and orientation sufficient to allow for laser drilling by the laser beam 15 emitted from beam delivery system 13. In addition, commands issued by computer control 27 are used to control the operation of scanning device 23. As noted, scanning device 23 may be controlled so as to produce precise, controlled movement of laser beam 15 across the surface of a part attached to part holder 26.

With reference to FIG. 3, there is illustrated the sample path 41 of exemplary laser beam pulses so as to produce a laser drill hole of the present invention. Therefore, computer control 27 controls the physical movements of the part 22 attached to part holder 26 as well as the very fine deflections of laser beam 15 bouncing off of scanning device 23 and impacting upon the surface of the part 22 along predetermined sample path 31. In addition, the opening and closing of shutter 17 and the laser power may likewise be controlled by computer control 27. In operation, for example, computer control 27 issues commands causing part holder 26 to manipulate a part 22 attached to part holder 26 into a desired position. Next, a scan routine is executed on computer control 27 to determine the motion of the scanning device 23. Quite often the scan routine includes a set of arbitrary waveform generators. The waveform generators generate waveforms representing the deflection of the scanning device in multiple dimensions required to direct the laser beam 15 along sample path 31. Computer control 27 operates shutter 17 to control the amount of power delivered to the part attached to part holder 26. Shutter 17 may be operated in an on and off fashion in accordance with a statically defined program, or may be open and closed in accordance with the feedback to a diagnostic signal originating at part holder 26, scanning device 23, or any other diagnostic device 37 measuring an attribute of laser beam 15 or the progress of the hole being drilled including optical components 21. After a hole is completed being drilled, computer control 27 can instruct part holder 26 to orient the part to begin drilling a new hole and the process is repeated.

One or more embodiments of the present invention have been described. Nevertheless, it will be understood that various modifications may be made without departing from the scope of the invention. Accordingly, other embodiments are within the scope of the following claims.

## Claims

1. A laser drilling apparatus comprising:
means for emitting a plurality of laser pulses;
means for deflecting said plurality of laser pulses at a part;
means for positioning said part for receiving said plurality of laser pulses; and
means for controlling said deflection means and said positioning means to drill a shaped hole in said part.

2. The laser drilling apparatus of claim 1, wherein said part is a metallic or ceramic coated metallic turbine airfoil and wherein said means for emitting a plurality of laser pulses comprises a laser selected from the group consisting of CPA Ti: Sapphire, CPA Cr:LiSAF, CPA Yb:YAG, CPA Yb:YLF, CPA optical parametric amplifier systems, excimer lasers, Q-switched, solid state lasers, and mode-locked solid state lasers.

3. The laser drilling apparatus of claim 1 or 2, wherein each of said plurality of laser pulses has a pulse duration between one hundred femtoseconds and ten picoseconds in duration and said plurality of laser pulses are emitted at a frequency of at least 1 kilohertz.

4. The laser drilling apparatus of claim 1, 2 or 3, wherein each of said plurality of laser pulses is less than or equal to 100 nanoseconds.

5. The laser drilling apparatus of any preceding claim, additionally comprising a shuttering means for alternately blocking and allowing passage of said plurality of laser pulses and a magnifying means for magnifying an intensity of at least one of said plurality of laser pulses and comprising a controlling means for adjusting an energy of at least one of said plurality of laser pulses.

6. The laser drilling apparatus of any preceding claim, further comprising a waveplate/polarizer for magnifying an intensity of at least one of said laser pulses.

7. The laser drilling apparatus of any preceding claim, further comprising means for focusing said plurality of laser pulses upon a drill plane.

8. The laser drilling apparatus of claim 7, wherein said focusing means comprises a focusing lens for focusing said plurality of laser pulses upon a drill plane and said focusing means is selected from the group consisting of a curved mirror, a holographic element, and a multiple lens telescope.

9. The laser drilling apparatus of any preceding claim, additionally comprising a beam shaping means for altering a beam intensity cross section of at least one of said plurality of laser pulses at a desired drill plane.

10. The laser drilling apparatus of claim 9, wherein said beam-shaping means is selected from the group consisting of 1/4 waveplates, 1/2 waveplates, and phase plates, group of phase plates, aperatures, optical systems for beam shaping, and spatial light modulators.

11. The laser drilling apparatus of any preceding claim, further comprising means for controlling an atmosphere in which said part is located and said atmosphere controlling means has an atmosphere selected from the group consisting of air, a near vacuum, and primarily helium atmosphere.

12. The laser drilling apparatus of any preceding claim, wherein said deflection means comprises a scanning device selected from the group consisting of autometric scanners, piezoelectric driven tip-tilt mirrors, and voice coil driven tip-tilt mirrors.

13. The laser drilling apparatus of any preceding claim, further comprising a means for providing diagnostic feedback on at least one of said plurality of laser pulses selected from the group consisting of a CCD camera, a photo-diode, an autocorelator, a power meter, and a quad cell detector.

14. A laser drilling apparatus comprising:
a laser for emitting a plurality of laser pulses;
a beam delivery system for receiving said plurality of laser beams comprising a scanning device for deflecting and emitting said plurality of laser pulses;
a part chamber comprising a part holder for positioning a part to receive said deflected plurality of laser pulses; and
a computer control for controlling said part holder and said scanning device to drill a hole in said part using said plurality of laser pulses.

15. The laser drilling apparatus of claim 14 wherein said laser is selected from the group consisting of CPA Ti:Sapphire, CPA Cr:LiSAF, CPA Yb:YAG, CPA Yb:YLF, CPA optical parametric amplifier systems, excimer lasers, Q-switched, and mode-locked solid state lasers and wherein each of said plurality of laser pulses is between one hundred femtoseconds and ten picoseconds in duration and wherein each of said laser pulses is emitted at a frequency of at least 1 kilohertz.

16. The laser drilling apparatus of claim 14 or 15, wherein each of said plurality of laser pulses is less than or equal to one hundred nanoseconds.

17. The laser drilling apparatus of claim 14, 15 or 16, wherein said laser is a chirped-pulse amplification (CPA) laser.

18. The laser drilling apparatus of any of claims 14 to 17, further comprising a shutter to alternately block and allow passage of said plurality of laser pulses and a waveplate/polarizer for magnifying an intensity of at least one of said laser pulses.

19. The laser drilling apparatus of any of claims 14 to 18, wherein said beam delivery system further comprises a focusing lens for focusing said plurality of laser pulses upon a drill plane.

20. The laser drilling apparatus of any of claims 14 to 19, wherein said part chamber has an atmosphere at a pressure of approximately ≤ 2O mTorr.

21. The laser drilling apparatus of any of claims 14 to 20, wherein said part chamber is adapted to provide an atmosphere comprised primarily of helium.

22. The laser drilling apparatus of any of claims 14 to 21, further comprising at least one optical component through which said plurality of laser pulses travel selected from the group consisting of a 1/4 waveplate, a 1/2 waveplate, and a phase plate.

23. A method for laser drilling holes comprising the steps of:
emitting a plurality of laser pulses from a laser;
deflecting said plurality of laser pulses off of a scanning device and emitting said plurality of laser pulses; and
utilizing a part holder within a part chamber to position a part to be drilled such that said part receives said plurality of laser pulses deflected off of said scanning device.

24. The method of claim 23, comprising the additional step of controlling said part holder and said scanning device with a computer control to drill a hole in said part using said plurality of laser pulses.

25. The method of claim 23 or 24, wherein said emitting said plurality of laser pulses comprises emitting each of said plurality of laser pulses having a duration of between one hundred femtoseconds and ten picoseconds and emitting said laser pulses at a frequency of at least 1 kilohertz.

26. The method of claim 25, wherein said emitting said plurality of laser pulses comprises emitting said laser pulses at a frequency between 3 and 4 kilohertz.

27. The method of any of claims 23 to 26, wherein said emitting said plurality of laser pulses comprises emitting each of said plurality of laser pulses having a duration of less than or equal to one hundred nanoseconds.

28. The method of any of claims 23 to 27, comprising the additional steps of operating a shutter to alternately block and allow passage of said plurality of laser pulses and magnifying at least one of said plurality of laser pulses by utilizing a waveplate/polarizer.

29. The method of any of claims 23 to 28, comprising the additional step of focusing said plurality of laser pulses upon a drill plane using a focusing lens.

30. The method of any of claims 23 to 29, wherein said utilizing said part holder within said part chamber comprises providing a near vacuum of 20mTorr or less within said part chamber.

31. The method of claim 30, wherein said controlling said part holder and said scanning device comprises the step of controlling said part holder and said scanning device in response to a feedback obtained from at least one diagnostic component selected from the group consisting of a CCD camera, a photo-diode, an autocorrelator, and a power meter.
